# EUROPEAN PATENT SPECIFICATION

(11) **EP 2 232 170 B1**
(45) Date of publication and mention of the grant of the patent: **10.10.2018**
(21) Application number: 08861091.0
(22) Date of filing: 10.10.2008
(51) Int. Cl.: F25B 5/00, F25C 1/08, F25C 1/24, F25D 11/02

(54) **ICE MAKER FOR REFRIGERATOR**
EISERZEUGER FÜR EINEN KÜHLSCHRANK
MACHINE À GLAÇONS POUR RÉFRIGÉRATEUR

(30) Priority: 18.12.2007 KR 20070133719
(43) Date of publication of application: 29.09.2010
(73) Proprietor: LG Electronics Inc., Seoul 150-721 (KR)
(72) Inventor: SUH, Kwang-Ha, Seoul 153-023 (KR); LEE, Tae-Hee, Seoul 153-023 (KR); PARK, Hong-Hee, Seoul 153-023 (KR); OH, Joon-Hwan, Seoul 153-023 (KR)
(74) Representative: Boult Wade Tennant LLP
(86) International application number: PCT/KR2008/005976
(87) International publication number: WO 2009/078562

(56) References cited:
- JP-A- 10 047 824
- KR-A- 20060 007 245
- KR-A- 20060 007 245
- US-A- 4 199 956
- US-A1- 2005 109 056

## Description

The present invention relates to an ice maker employed in a refrigerator.

### [Background Art]

In recent time, large-sized refrigerators are provided with ice makers therein for making ice pieces. The ice maker is configured such that a certain amount of water supplied in an ice making tray is iced by applying cold air and then the ice in the tray is carried to an ice storing container for storage.

In such ice maker, the ice making tray is disposed under a condition having an ice point (freezing point) lower than 0°C, such as a freezing chamber, so as to freeze water by cold air. Hence, a portion where cold air first reaches starts to be iced, and such icing is advanced toward a central direction. For example, the surface of the water which is first contacted by its surrounding cold air start to be iced to form a core of ice. Such icing is in progress toward the center of the water once the core of ice is formed, thereby generating ice eventually.

However, the related art ice maker is configured to be disposed in the freezing chamber to freeze water using cold air cooling the freezing chamber or configured to freeze water by inducing cold air of the freezing chamber to a refrigerating chamber door even if it is installed in the refrigerating chamber door. Accordingly, a loss occurs due to a convection heat transfer, which lowers icing speed.

Furthermore, water supplied to the ice making tray contains a certain amount of air. Such air is separated from the water during the process of freezing the water in the ice making tray, so as to exist in the form of air bubble. However, as mentioned above, during the icing process, the surface of water is first frozen by the cold air of the freezing chamber. As a result, such air bubble in the water is not discharged outwardly but remains, which causes a generation of opaque ice.

KR 20060007245, which is considered to be the prior art closest to the subject matter of claim 1, discloses an ice making arrangement for a refrigerator according to the preamble of claim 1 using an ice making evaporator. US 4,199,956 discusses an ice cube making machine with a plurality of freezing elements immersed below the upper surface of the water level in an ice making water pan. US 2005/0109056 relates to a refrigerator also using an ice making evaporator.

### [Disclosure]

### [Technical Solution]

It would be desirabe to provide an ice maker for a refrigerator capable of enhancing an icing speed.

It would also be desirable to provide an ice maker for a refrigerator capable of facilitating the generation of transparent ice by allowing air bubble separated from water during an icing process to be quickly discharged out of the water.

The invention provides a refrigerator as set out in claim 1.

### [Description of Drawings]

FIG. 1 is a perspective view showing a three-door bottom freezer type refrigerator having an ice maker according to the present invention;
FIGS. 2 to 5 are block diagrams showing embodiments of a refrigerating cycle applied to the refrigerator shown in FIG. 1;
FIG. 6 is a perspective view showing the ice maker of the refrigerator shown in FIG. 1;
FIGS. 7 and 8 are horizontal and longitudinal cross-sectional views showing an ice making evaporator in the ice maker shown in FIG. 6;
FIGS. 9 and 10 are schematic views showing a relation between the ice maker of the refrigerator shown in FIG. 1 and a water supply/drain unit; and
FIGS. 11 to 16 are block diagrams showing other embodiments of a refrigerating cycle applied to the refrigerator shown in FIG. 1.

### [Mode for Invention]

Hereinafter, description will be given in detail of a refrigerator according to the present invention with reference to the accompanying drawings.

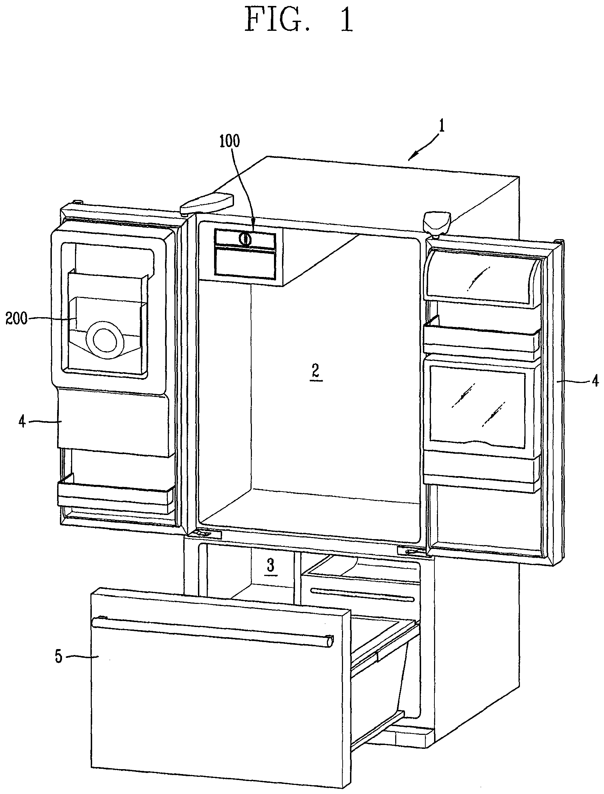

FIG. 1 is a perspective view showing a three-door bottom freezer type refrigerator having an ice maker according to the present invention.

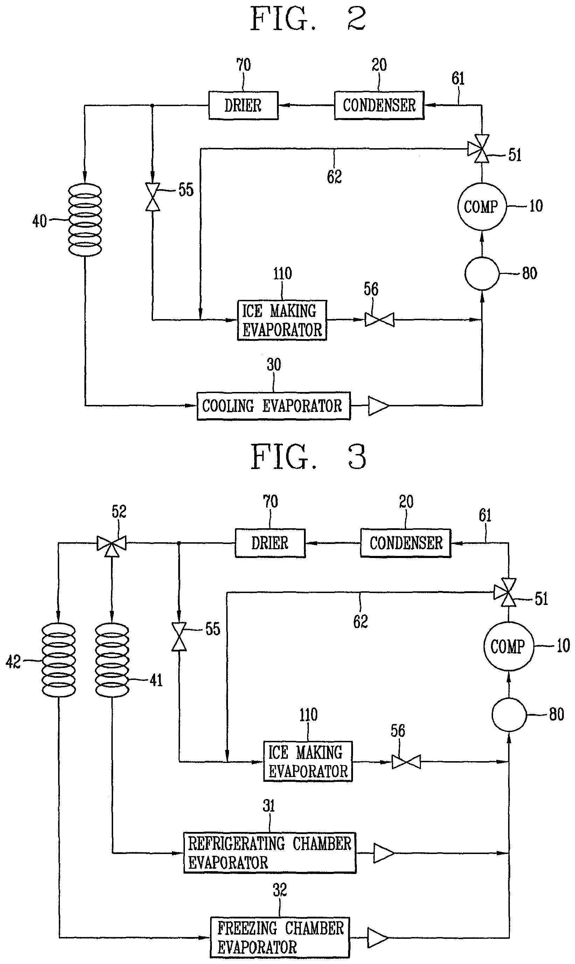

As shown in FIG. 1, the refrigerator according to the present invention may include a refrigerating chamber 2 disposed at an upper side of a refrigerator main body 1 for storing foods in a fresh state, and a freezing chamber 3 disposed at a lower side of the refrigerator main body 1 for storing foods in a frozen state. The refrigerator main body 1 is provided with a refrigerating chamber door 4 and a freezing chamber door 5 respectively for opening/closing the refrigerating chamber 2 and the freezing chamber 3. A machine room (not shown) in which a compressor 10 (shown in FIG. 2 or the like) and a condenser 20 (shown in FIG. 2 or the like) are disposed is formed at a lower end portion of a rear surface of the refrigerator main body 1. A cooling evaporator 30 (shown in FIG. 2 or the like) connected to the condenser 20 and the compressor 10 for supplying cold air to the refrigerating chamber 2 or the freezing chamber 3 is installed at a rear, lateral or upper surface of the refrigerator main body 1, or be installed inside a partition wall dividing the refrigerating chamber 2 and the freezing chamber 3. Only one cooling evaporator 30 may be provided so as to distribute cold air to the refrigerating chamber 2 and the freezing chamber 3. Alternatively, the cooling evaporator 30 may be provided by being divided into a refrigerating chamber evaporator 31 (shown in FIG. 3 or the like) and a freezing chamber evaporator 32 (shown in FIG. 3 or the like), such that cold air can independently be supplied to the refrigerating chamber 2 and the freezing chamber 3.

The refrigerating chamber 2 is provided with an ice maker 100 for generating ice, and an ice bin 200 for storing ice generated by the ice maker 100 is installed in the refrigerating chamber door 4. Although not shown in the drawings, the ice maker 100 may be installed above the ice bin 200 in the refrigerating chamber door 4.

The ice maker 100, as shown in FIGS. 2 to 5, may include an ice making evaporator 110 configuring a refrigerating cycle device together with the compressor 10, the condenser 20 and the cooling evaporator 30, an ice making tray 120 for containing water to be iced as much as the ice making evaporator 110 being sunk, and a container driving unit for rotating the ice making tray 120 by a certain angle so as to drop the generated ice.

The ice making evaporator 110, as aforementioned, is connected to a refrigerating cycle device for cooling a refrigerator which is configured by the compressor 10, the condenser 20 and the cooling evaporator 30, so as to configure a refrigerating cycle device all together. For example, as shown in FIG. 2, the refrigerating cycle device can be configured by one compressor 10, one condenser 20 connected to a discharge side of the compressor 10, the cooling evaporator 30 connected to the one condenser 20, and the ice making evaporator 110 connected in parallel to the condenser 20 together with the cooling evaporator 30. Also, there is further provided an expanding valve 40 disposed between the condenser 20 and the cooling evaporator 30, in more particular, at a portion lower than a diverged point between the cooling evaporator 30 and the ice making evaporator 110 so as to expand a high pressure refrigerant. A first refrigerant converting valve 51 implemented as a three-way valve is installed between a discharge side of the compressor 10 and an inlet of the condenser 20. A first outlet of the first refrigerant switching valve 51 allows the connection between the compressor 10 and the condenser 20 whereas a second outlet of the first refrigerant switching valve 51 is connected to a bypass pipe diverged from a main pipe 61 for connecting the discharge side of the compressor 10 to the inlet of the ice making evaporator 110.

First and second switching valves 55 and 56 are installed at inlet and outlet sides of the ice making evaporator 110, respectively. Accordingly, the first and second switching valves 55 and 56 are open upon the icing so as to allow a refrigerant to be introduced into the ice making evaporator 110 via the main pipe 61, whereas being closed upon an ice separation or a non-operation of icing so as to block the introduction of a refrigerant into the ice making evaporator 110 via the bypass pipe 62. Alternatively, only one of the first and second switching valves 56, especially, the first switching valve 55 may be installed at the inlet side of the ice making evaporator 110.

Here, only one cooling evaporator 30 may be installed as shown in FIG. 2. Alternatively, as shown in FIG. 3, the refrigerating chamber evaporator 31 and the freezing chamber evaporator 32 may independently be installed. In this case, the refrigerating chamber evaporator 31 and the freezing chamber evaporator 32 may independently be provided so as to be connected to each other in parallel. A second refrigerant converting valve 52 implemented as a three-way valve for distributing a refrigerant for supply is installed at an inlet of the refrigerating chamber evaporator 31 and the freezing chamber evaporator 32. A first outlet of the second refrigerant converting valve 52 is connected to the refrigerating chamber evaporator 31 while a second outlet thereof is connected to the freezing chamber evaporator 32. Expanding valves 41 and 42 are independently disposed between the second refrigerant converting valve 52 and the refrigerating chamber evaporator 31 and between the second refrigerant converting valve 52 and the freezing chamber evaporator 32. Alternatively, one integral expanding valve may be installed between the second refrigerant converting valve 52 and the refrigerating chamber evaporator 31 and between the second refrigerant converting valve 52 and the freezing chamber evaporator 32.

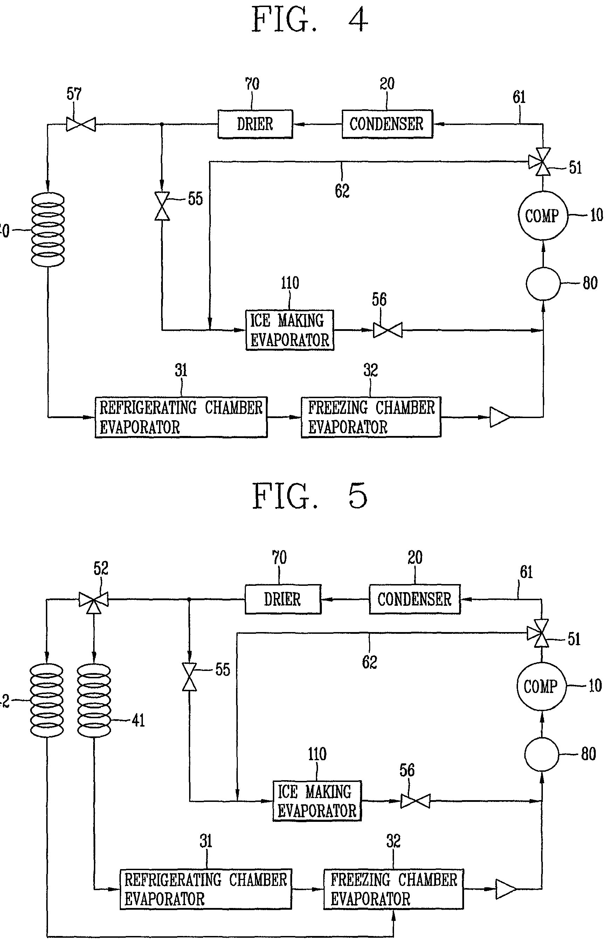

On the other hand, the cooling evaporator 30, as shown in FIG. 4, may be configured such that the refrigerating chamber evaporator 31 is connected to the freezing chamber evaporator 32 in series. In this case, a third switching valve 57 implemented as a two-way valve by which a refrigerant selectively flows is installed between the outlet side of the condenser 20 and the refrigerant exclusive evaporator 30. The expanding valve 40 is installed between the third switching valve 57 and the refrigerant exclusive evaporator, namely, the refrigerating chamber evaporator 31. However, as shown in FIG. 5, a second refrigerant converting valve 52 implemented as a three-way valve for allowing a refrigerant to selectively flow to the refrigerating chamber evaporator 31 and the freezing chamber evaporator 32 is installed at the outlet side of the condenser 20. A first outlet of the second refrigerant converting valve 51 may sequentially be connected in series to the refrigerating chamber evaporator 31 and the freezing chamber evaporator 32, and a second outlet thereof may directly be connected to the freezing chamber evaporator 32. In this case, the expanding valves 41 and 42 are installed respectively between the first outlet of the second refrigerant converting valve 52 and the inlet side of the refrigerating chamber evaporator 31 and between the second outlet of the second refrigerant converting valve 52 and the freezing chamber evaporator 32. Alternatively, the expanding valve may be installed as one integral device.

Unexplained reference numeral 70 denotes a drier, and 80 denotes an accumulator.

Operation and effect of the refrigerator according to the present invention having such configuration will now be described.

That is, the compressor 10 starts operating to compress a refrigerant. The compressed refrigerant is discharged into the condenser 20 via the main pipe 61. The refrigerant flown through the condenser 20 is introduced into the cooling evaporator 30 via the expanding valve 40. The refrigerant introduced into the cooling evaporator 30 is recollected to the compressor 10 with generating cold air. The cold air generated in the cooling evaporator 30 is supplied each to the refrigerating chamber 2 and the freezing chamber 3, so as to keep foods in the refrigerator in a fresh state.

Here, in case where the cooling evaporator 30 is configured by the refrigerating chamber evaporator 31 and the freezing chamber evaporator 32 which are connected to each other in parallel or in series, a refrigerant may be supplied respectively or sequentially to the refrigerating chamber evaporator 31 and the freezing chamber evaporator 32, so as to independently cool the refrigerating chamber 2 and the freezing chamber 3.

In the meantime, in case where a refrigerating cycle device of the refrigerator carries out an ice making operation, the first and second switching valves 55 and 56 are open. Accordingly, a refrigerant which flew through the condenser 20 via the first switching valve 55 is partially introduced into the ice making evaporator 110 via the main pipe 61. The refrigerant introduced in the ice making evaporator 110 quickly freezes water contained in the ice making tray 120 while flowing through the ice making evaporator 110, so as to fast make ice with high transparency.

Here, the ice making evaporator 110 may be provided with an ice core portion for forming an ice core.

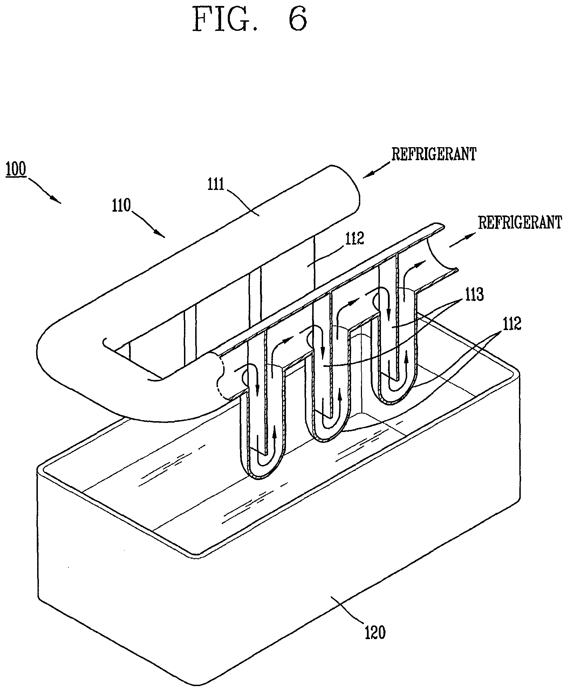

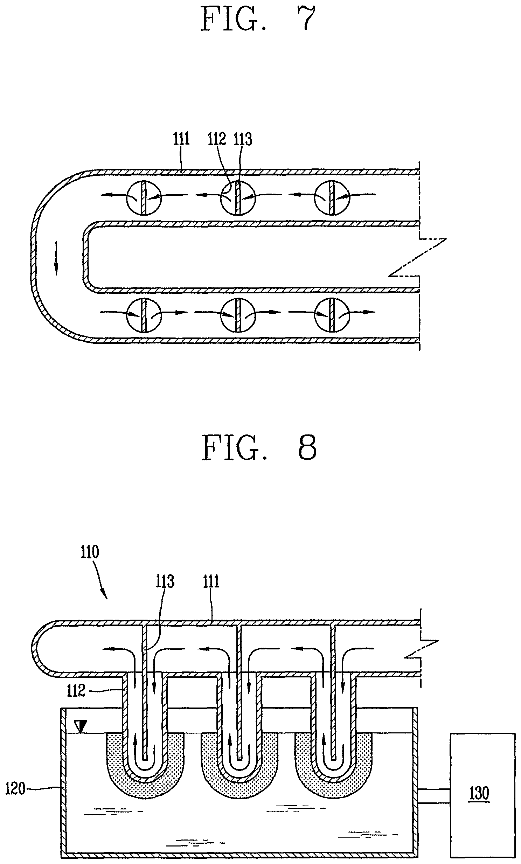

To this end, the ice making evaporator 110, as shown in FIGS. 6 to 8, may include a housing 111 having inlet and outlet at both ends in a lengthwise direction and curved in a shape of 'Π', and at least one or more ice core portions 112 protruded from a lower surface of the housing 111 with a certain length. The length of the ice core portion 112 may be formed as long as the lower portion thereof being sunk in the water contained in the ice making tray 120.

A refrigerant guiding plate 113 which partitions each ice core portion 112 in a refrigerant flowing direction is formed in the ice core portion 112 to extend from upper side to lower side of an inner circumferential surface of the housing 111. The refrigerant guiding plate 113 is formed shorter than the length of the ice core portion 112 such that front and rear sides of each ice core portion 112 can be communicated with each other at a lower end of the refrigerant guiding plate 113. Accordingly, a refrigerant can be introduced by the refrigerant guiding plate 113 to evenly circulate the whole ice core portions 112.

The ice core portion 112 may separately be fabricated from the housing 11 of the ice making evaporator 110 to be assembled to an outer surface of the housing 111. In this case, the ice core portion 112 may preferably be implemented as a heat pipe, or a rod made of copper or a material having high thermal conductivity.

The ice making tray 120 may be formed of a material having high thermal conductivity, and then coupled to a container driving unit 130 for shaking the ice making tray 120 at certain speed, which allows air bubble to be out of water during the icing process. For example, the container driving unit 130 may be configured such that the ice making tray 120 is connected to a separate motor which rotates forward and backward and thus the ice making tray 120 slowly bi-directionally rotates within an approximately certain angle for an ice making time period. Alternatively, the container driving unit 130 may be configured such that an ice separating motor for rotating the ice making tray 120 in order to separate ice from the ice making container 120 is used so as to allow the ice making tray 120 to bi-directionally rotate even during the ice making, as aforementioned.

With the ice making evaporator having such configuration, while a refrigerant introduced into the inlet of the housing 111 flows toward the outlet thereof, the refrigerant makes a zigzag movement in a longitudinal direction of each ice core portion 112 by the refrigerant guiding plate 113 disposed inside each ice core portion 112. Accordingly, the refrigerant evenly circulates in each of the ice core portions 112, which allows each ice core portion 112 to be cooled below a freezing point within a short time. A surface temperature of the ice core portion 112 becomes lower than a peripheral temperature, namely, the temperature of the refrigerating chamber 2. Accordingly, the surface of each ice core portion 112 starts to be frozen. Such freezing serves as an ice core so as to freeze water around it. In addition, as the ice making tray 120 is disposed in the refrigerating chamber 2 or the refrigerating chamber door 4, the temperature of the surface of water can be maintained higher than the freezing point, whereby the surface of water having air bubble generated therein is not frozen yet. Hence, the air bubble generated in the water in the ice making tray 120 moves toward the surface of water not frozen yet to be discharged, thereby generating transparent ice without containing air bubble therein.

Such results can be obtained from the case using a heat pipe or a thermal transfer rod as the ice core portion 112. That is, since one end of the heat pipe or thermal transfer rod comes into contact with the cold ice making evaporator 110, the heat pipe or the thermal transfer rod is cooled within a short time. The surface of the heat pipe or the thermal transfer rod is thusly frozen, so as to rapidly freeze such water in the ice making tray 120. In addition, since air bubble generated in the water in the ice making tray 120 is discharged out of the surface of non-frozen water, the ice generated can have high transparency. Also, during the icing of the water in the ice making tray 120, the container driving unit 130 is operated to continuously shake the ice making tray 120, which makes air bubble fast effectively be discharged, thereby further enhancing the transparency of ice.

Next, when the surface of the ice core portion 112 is frozen, the direction of the first refrigerant converting valve 51 is changed such that a refrigerant of the compressor 10 is guided toward the bypass pipe 62 via the second outlet. The high temperature refrigerant guided to the bypass pipe 62 is introduced into the inlet of the ice making evaporator 110. The high temperature refrigerant then circulates inside each ice core portion 112 by the refrigerant guiding plate 113, thereby to increase a surface temperature of the ice core portion 112 within a short time. Accordingly, the surface of the ice core portion 112 and the ice are quickly separated from each other, and thereby ice is dropped in the ice making tray 120. Prior to this process, by removing the water from the ice making tray 120, when the ice dropped in the ice making tray 120 is collected in an ice storing container 200 disposed below the ice making tray 120, it can be prevented that water cannot be poured together with the ice in the ice storing container 200.

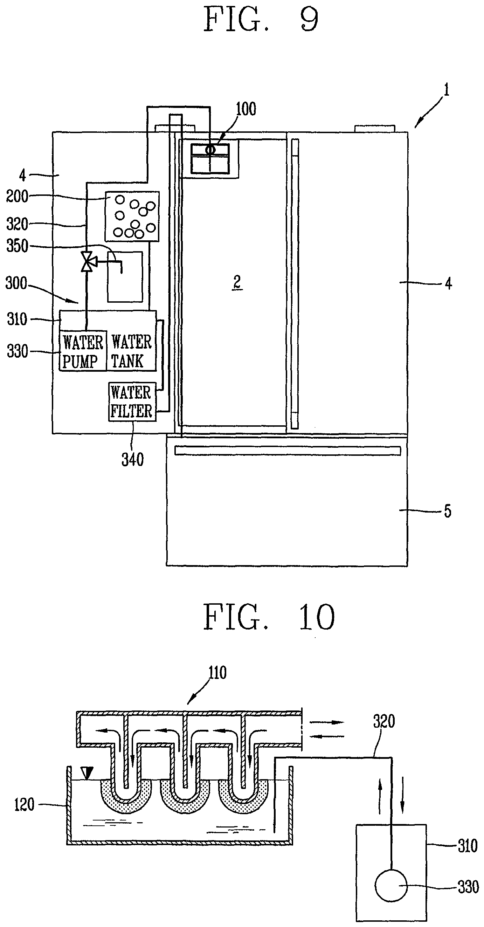

To this end, as shown in FIG. 9, the refrigerating chamber door 4 is provided with a supply/drain unit 300 for supplying or discharging water of the ice making tray 120. The supply/drain unit 300 may include a water tank 310 installed in the refrigerating chamber door 4 for storing a certain amount of water, a water supply/drain line 320 and a water pump 330 for pumping and supplying water to the ice making container 120 upon freezing water of the water tank 310 while pumping and discharging water of the ice making tray 120 upon separating ice. A water filter 340 for filtering newly introduced water is further provided at an inlet of the water tank 310. A dispenser line 350 for supplying water to a dispenser may further be connected in the middle of the water supply/drain line 320. A drain pipe 360 for discharging water generated when ice stored in the bottom of the ice storing container 200 is melted may be connected to the water tank 310 or to a drain tray (not shown).

In the meantime, other embodiments of the refrigerating cycle device in the refrigerator according to the present invention will now be described.

That is, the aforementioned embodiments are implemented such that the cooling evaporator 30 is connected to the ice making evaporator 110 in parallel; however, these embodiments are implemented such that the cooling evaporator 30 is connected to the ice making evaporator 110 in series.

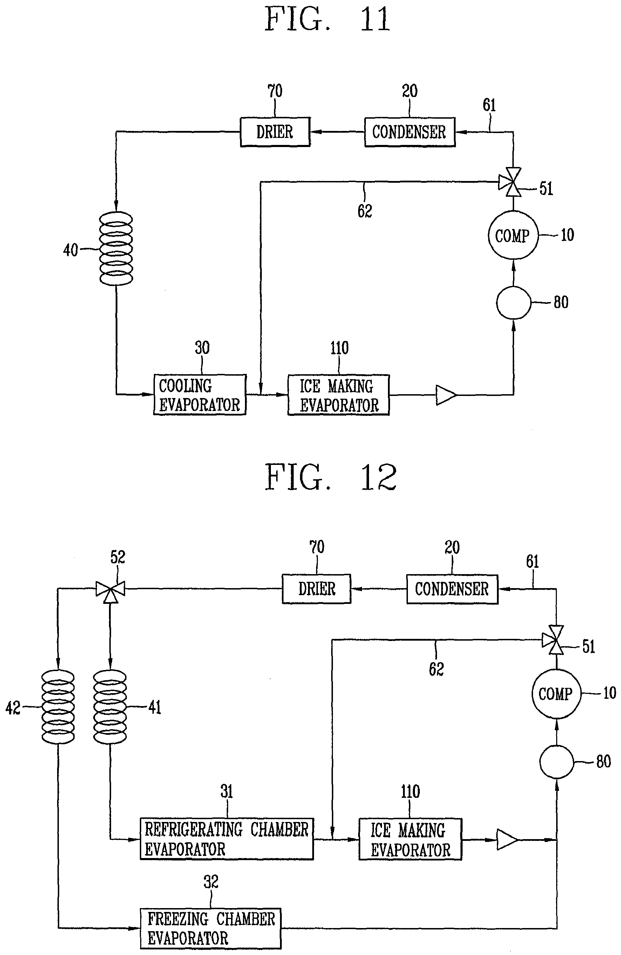

For example, as shown in FIG. 11, the compressor 10, the condenser 20, the cooling evaporator 30 and the ice making evaporator 110 are sequentially disposed to configure a closed loop. The first refrigerant converting valve 51 is disposed between the compressor 10 and the condenser 20. The second outlet of the first refrigerant converting valve 51 is diverged from the main pipe 61 to be connected to the inlet of the ice making evaporator 110 via the bypass pipe 62. The expanding valve 40 is installed between the condenser 20 and the cooling evaporator 30.

Even in this case, the ice core portions 112 formed as long as being sunk in water in the ice making tray 120 is protruded from the lower surface of the ice making evaporator 110, as shown in FIGS. 6 to 8. Each ice core portion 112 is provided with a refrigerant guiding plate 113 allowing an even circulation of the refrigerant. As shown in the aforementioned embodiments, the ice making tray 120 may be coupled to the container driving unit 130 and simultaneously to the supply/drain unit 300.

In the refrigerant according to the above embodiment, a refrigerant discharged from the compressor 10 is introduced into the refrigerant evaporator 30 via the condenser 20 to generate cold air. Such cold air is supplied each to the refrigerating chamber 2 and the freezing chamber 3 of the refrigerant main body 1, so as to keep food stored in each chamber in the fresh state. Simultaneously, the refrigerant introduced into the ice making evaporator 110 via the refrigerant evaporator 30 cools the ice core portion 12 of the ice making evaporator 110 in a short time, so as to form ice, whereby an ice making time can drastically be decreased and transparent ice can be creased due to the removal of air bubble. On the other hand, upon separating ice, the first refrigerant converting valve 51 is used to introduce a high temperature refrigerant into the ice making evaporator 110 via the bypass pipe 62 and thereby the ice core portion 112 of the ice making evaporator 110 is heated to allow a fast separation of the created ice, resulting in facilitating the separation of ice. Other components including the ice core portion 112 and an operational effect thereof are the same or similar to the aforementioned embodiments, detailed explanation of which will thusly be omitted.

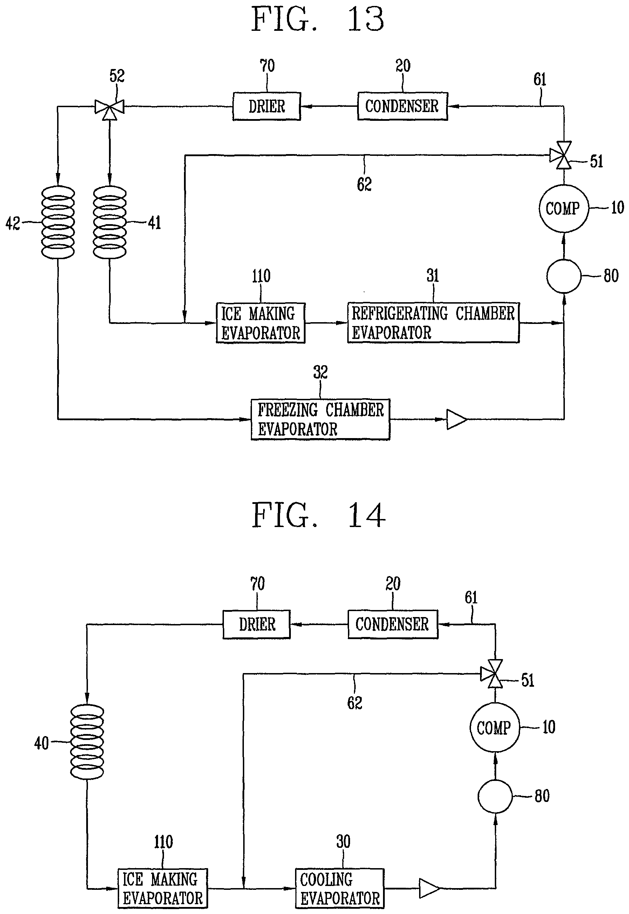

Also, the cooling evaporator according to this embodiment may be configured by a refrigerating chamber evaporator 31 and a freezing chamber evaporator. In this case, the refrigerating chamber evaporator 31 may be connected to the freezing chamber evaporator 32 in parallel as shown in FIGS. 12 and 13.

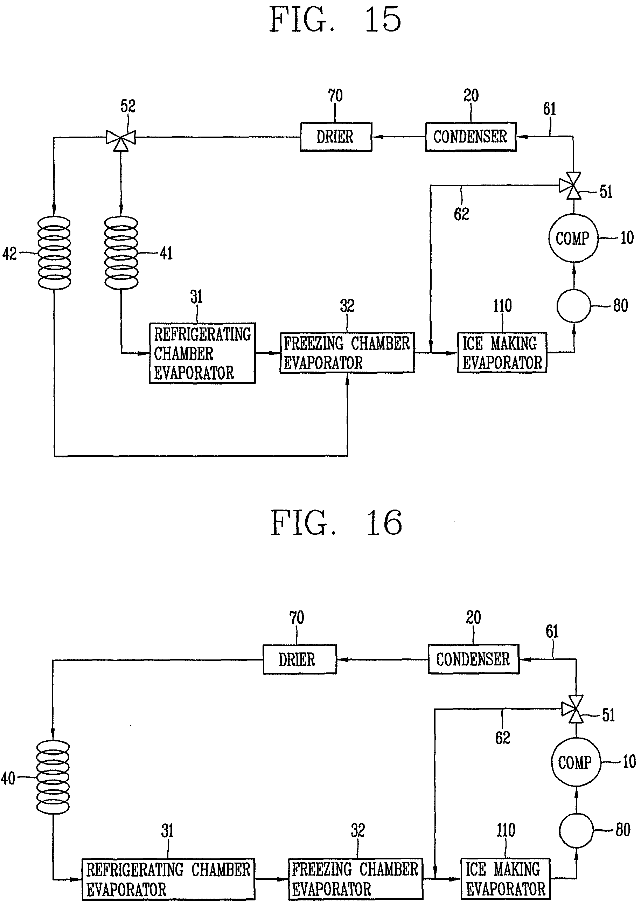

Alternatively, the cooling evaporator 30 and the ice making evaporator 110 of the refrigerating cycle device in the refrigerator according to the present invention may be connected to each other in series. In this case, as shown in FIG. 14, one cooling evaporator can be used to distribute cold air to the refrigerating chamber and the freezing chamber for supply. Otherwise, as shown in FIGS. 15 and 16, the refrigerating chamber evaporator 31 and the freezing chamber evaporator 32 are independently disposed, so as to connect the refrigerating chamber evaporator 31 and the freezing chamber evaporator 32 to each other in series.

The present invention has been implemented from the perspective of examples applied to a bottom freezer type refrigerator in which a refrigerating chamber is disposed at an upper side and the freezing chamber is disposed below it. However, the present invention can be applied to a top mount type refrigerator having a refrigerating chamber disposed below the freezing chamber or a side-by-side type refrigerator having refrigerating chamber and freezing chamber disposed side by side.

## Claims

1. A refrigerator comprising:
a refrigerator main body (1) having at least one chamber (2, 3) and at least one door (4, 5) for opening/closing the at least one chamber (2, 3), and having at least one ice making tray (120);
a compressor (10) disposed in the refrigerator main body (1);
a condenser (20) disposed in the refrigerator main body (1) and connected to the compressor (10);
a cooling evaporator (30) disposed in the refrigerator main body (1) and connected to the condenser (20) for supplying cold air into the at least one chamber (2, 3); and
an ice making evaporator (110) disposed in the refrigerator main body (1) and connected to the condenser (20) for freezing water contained in the ice making tray (120),
**characterised in that** the ice making evaporator (110) further comprises a housing (111) having an inlet and an outlet allowing introduction and discharge of a refrigerant, and at least one or more ice core portions (112) each protruding from one side of the housing by a certain length and being sunk in the water of the ice making tray (120), and **in that** the refrigerator further comprises:
a water tank (310) configured to store water to be supplied into the ice making tray (120) or water recollected from the ice making tray (120);
a water supply/drain line (320) connected between the water tank (310) and the ice making tray (120); and
a water pump (330) configured so as to alternately supply or drain the water, and disposed in a portion of the water supply/drain line (320) and configured to pump water of the water tank (310) so as to supply water to the ice making tray (120) via the water supply/drain line (320) for making ice at the at least one ice core portion (112) and pump water remaining in the ice making tray (120) so as to drain into the water tank (310) via the water supply/drain line (320) before ice made at the at least one ice core portion (112) is separated.

2. The refrigerator of claim 1, wherein the cooling evaporator (30) is connected to the ice making evaporator (110) in parallel.

3. The refrigerator of claim 1, wherein the cooling evaporator (30) is connected to the ice making evaporator (110) in series.

4. The refrigerator of claim 2 or 3, wherein the cooling evaporator (30) is provided in plurality, and the plurality of cooling evaporators (31, 32) are connected to each other in parallel, and
wherein a plurality of expanding valves (41, 42) are disposed between each of the cooling evaporators (31, 32) and the condenser (20).

5. The refrigerator of claim 2 or 3, wherein the cooling evaporator (30) is provided in plurality, and the plurality of cooling evaporators (31, 32) are connected to each other in series.

6. The refrigerator of claim 2, wherein a valve (55, 56) for restricting the flow of refrigerant is disposed between the condenser (20) and the ice making evaporator (110) or between the ice making evaporator (110) and the compressor (10).

7. The refrigerator of claim 1, wherein the cooling evaporator (30) is connected to the ice making evaporator (110) in series,
wherein the cooling evaporator (30) is provided in plurality, and the plurality of cooling evaporators (31, 32) are connected to each other in parallel, and
wherein the ice making evaporator (110) is connected in series to one of the plurality of cooling evaporators (31, 32).

8. The refrigerator of claim 1, wherein the cooling evaporator (30) and the ice making evaporator (110) are connected to one condenser (20), and
wherein the one condenser (20) to which the cooling evaporator (30) and the ice making evaporator (110) are connected, is connected to one compressor (10).

9. The refrigerator of any one of claims 1 to 8, wherein a refrigerant converting valve (51) is disposed at a discharge side of the compressor (10), and a bypass pipe (62) for guiding a high temperature refrigerant upon separating ice is connected between the refrigerant converting valve (51) and an inlet of the ice making evaporator (110).

10. The refrigerator of claim 1, wherein the housing (111) is formed in a shape of a pipe having inlet and outlet at both sides thereof, and the ice core portions (112) are formed individually along the lengthwise direction of the housing (111).

11. The refrigerator of claim 10, wherein the ice core portions (112) are integrally formed at one side surface of the housing (111), and
wherein a refrigerant guiding plate (113) extends in a lengthwise direction inside each ice core portion (112), to divide the ice core portion (112) in an approximately orthogonal direction to the flowing direction of a refrigerant such that the divided parts of each ice core portion (112) are communicated with each other at the lower end thereof.

12. The refrigerator of claim 10, wherein the ice core portion (112) is attached to an outer surface of the housing (111), and
wherein the ice core portion (112) is configured as a heat pipe or a rod formed of a material having high thermal conductivity.

13. The refrigerator of any one of claims 1 to 12, wherein an ice storing container (200) for storing ice created in the ice making tray (120) is further provided at one side of the ice making tray (120), and a drain pipe for discharging water generated when ice is melted is connected to the ice storing container (200), and
wherein the drain pipe is connected to the water tank (310).

14. The refrigerator of any one of claims 1 to 13, further comprising a container driving unit (130) configured such than an ice separating motor for rotating the ice making tray (120) in order to separate ice from the ice making container (120) allows the ice making tray (120) to bi-directionally rotate even during the ice making.

## Patentansprüche

1. Kühlschrank mit einem Kühlschrankkörper (1) mit mindestens einer Kammer (2, 3) und mindestens einer Tür (4, 5) zum Öffnen/Schließen der mindestens einen Kammer (2, 3) und mit mindestens einer Eiserzeugungsschale (120);
einem in dem Kühlschrankkörper (1) angeordneten Verdichter (10),
einem Verflüssiger (20), der im Hauptkörper (1) des Kühlschranks angeordnet und mit dem Verdichter (10) verbunden ist,
einem Kühlverdampfer (30), der im Hauptkörper (1) des Kühlschranks angeordnet und mit dem Verflüssiger (20) verbunden ist, um kalte Luft in die mindestens eine Kammer (2, 3) zu liefern; und
einem im Hauptkörper (1) des Kühlschranks angeordneten und mit dem Verflüssiger (20) verbundenen Eisbereitungsverdampfer (110) zum Gefrieren von in der Eiserzeugungsschale (120) enthaltenem Wasser,
**dadurch gekennzeichnet, dass** der Eisbereitungsverdampfer (110) ferner ein Gehäuse (111) mit einem Einlass und einem Auslass , die das Einführen und Austragen eines Kältemittels ermöglichen, und mindestens einen oder mehrere Eiskernabschnitte (112) umfasst, die jeweils von einer Seite des Gehäuses um eine bestimmte Länge vorstehen und im Wasser der Eiserzeugungsschale (120) versenkt sind, und dass der Kühlschrank ferner umfasst:
einen Wassertank (310), der konfiguriert ist, um Wasser , das in die Eiserzeugungsschale (120) zugeführt werden soll, oder Wasser, das aus der Eiserzeugungsschale (120) zurückgeholt wird, zu speichern;
eine Wasserzu- und -abfuhrleitung (320), die zwischen dem Wassertank (310) und der Eiserzeugungsschale (120) angeschlossen ist; und
eine Wasserpumpe (330), die konfiguriert ist, um das Wasser abwechselnd zu- oder abzuführen, und in einem Abschnitt der Wasserzu- und -abfuhrleitung (320) angeordnet und eingerichtet ist, Wasser des Wassertanks (310) zu pumpen, um Wasser über die Wasserzu- und - abfuhrleitung (320) zur Herstellung von Eis dem mindestens einen Eiskernabschnitt (112) zuzuführen und im Eiskernabschnitt (120) verbleibendes Wasser über die Wasserzu- und -abfuhrleitung (320) in den Wassertank (310) abzuführen, bevor das an dem mindestens einen Eiskernabschnitt (112) erzeugte Eis abgetrennt wird.

2. Kühlschrank nach Anspruch 1, bei dem der Kühlverdampfer (30) mit dem Eisverdampfer (110) parallel geschaltet ist.

3. Kühlschrank nach Anspruch 1, bei dem der Kühlverdampfer (30) mit dem Eisverdampfer (110) in Reihe geschaltet ist.

4. Kühlschrank nach Anspruch 2 oder 3, bei dem der Kühlverdampfer (30) mehrfach vorgesehen ist und die mehreren Kühlverdampfer (31: 32) parallel miteinander verbunden sind, und
wobei mehrere Expansionsventile (41, 42) zwischen jedem der Kühlverdampfer (31, 32) und dem Verflüssiger (20) angeordnet sind.

5. Kühlschrank nach Anspruch 2 oder 3, bei dem der Kühlverdampfer (30) mehrfach vorgesehen ist und die mehreren Kühlverdampfer (31, 32) in Reihe miteinander verbunden sind.

6. Kühlschrank nach Anspruch 2, bei dem ein Ventil (55, 56) zur Begrenzung des Kältemittelflusses zwischen dem Verflüssiger (20) und dem Eiserzeugungsverdampfer (110) oder zwischen dem Eiserzeugungsverdampfer (110) und dem Verdichter (10) angeordnet ist.

7. Kühlschrank nach Anspruch 1, bei dem der Kühlverdampfer (30) mit dem Eiserzeugungsverdampfer (110) in Reihe geschaltet ist, wobei der Kühlverdampfer (30) mehrfach vorgesehen ist und die mehreren Kühlverdampfer (31, 32) parallel miteinander verbunden sind, und wobei der Eiserzeugungsverdampfer (110) mit einem der mehreren Kühlverdampfer (31, 32) in Reihe geschaltet ist.

8. Kühlschrank nach Anspruch 1, bei dem der Kühlverdampfer (30) und der Eiserzeugungsverdampfer (110) mit einem einzigen Verflüssiger (20) verbunden sind, und wobei der eine Verflüssiger (20), an den der Kühlverdampfer (30) und der Eiserzeugungsverdampfer (110) angeschlossen sind, mit einem einzigen Verdichter (10) verbunden ist.

9. Kühlschrank nach einem der Ansprüche 1 bis 8, bei dem ein Kältemittelumwandlungsventil (51) an einer Druckseite des Verdichters (10) angeordnet ist und eine Bypassleitung (62) zur Führung von Hochtemperatur-Kältemittel beim Abtrennen von Eis zwischen dem Kältemittelumwandlungsventil (51) und einem Einlass des Eiserzeugungsverdampfers (110) angeschlossen ist.

10. Kühlschrank nach Anspruch 1, bei dem das Gehäuse (111) in Form eines Rohres mit Einlass und Auslass an beiden Seiten desselben ausgebildet ist und die Eiskernabschnitte (112) einzeln entlang der Längsrichtung des Gehäuses (111) ausgebildet sind.

11. Kühlschrank nach Anspruch 10, bei dem die Eiskernabschnitte (112) einstückig an einer Seitenfläche des Gehäuses (111) ausgebildet sind und wobei sich eine Kältemittelführungsplatte (113) in Längsrichtung innerhalb jedes Eiskernabschnitts (112) erstreckt, um den Eiskernabschnitt (112) in einer annähernd orthogonalen Richtung zur Strömungsrichtung eines Kältemittels zu teilen, so dass die geteilten Teile jedes Eiskernabschnitts (112) an dessen unterem Ende miteinander verbunden sind.

12. Kühlschrank nach Anspruch 10, bei dem der Eiskernabschnitt (112) an einer Außenfläche des Gehäuses (111) befestigt ist und der Eiskernabschnitt (112) als Wärmerohr oder -stab aus einem Material mit hoher Wärmeleitfähigkeit ausgebildet ist.

13. Kühlschrank nach einem der Ansprüche 1 bis 12, bei dem ein Eisspeicherbehälter (200) zum Speichern von in der Eiserzeugungsschale (120) erzeugtem Eis ferner an einer Seite der Eiserzeugungsschale (120) vorgesehen ist und ein Ablaufrohr zum Abführen von Wasser, das beim Schmelzen von Eis erzeugt wird, mit dem Eisspeicherbehälter (200) verbunden ist, und wobei das Ablaufrohr mit dem Wassertank (310) verbunden ist.

14. Kühlschrank nach einem der Ansprüche 1 bis 13, ferner mit einer Behälterantriebseinheit (130), die konfiguriert ist, um die Eiserzeugungsschale 120) zu drehen, um das Eis von der Eiserzeugungsschale (120) zu trennen, so dass sich die Eiserzeugungsschale (120) auch während der Eiserzeugung bidirektional drehen kann.

## Revendications

1. Réfrigérateur comprenant :
un corps principal de réfrigérateur (1) ayant au moins une chambre (2, 3) et au moins une porte (4, 5) pour ouvrir/fermer l'au moins une chambre (2, 3), et ayant au moins un plateau de fabrication de glace (120) ;
un compresseur (10) disposé dans le corps principal de réfrigérateur (1) ;
un condenseur (20) disposé dans le corps principal de réfrigérateur (1) et relié au compresseur (10) ;
un évaporateur de refroidissement (30) disposé dans le corps principal de réfrigérateur (1) et relié au condenseur (20) pour fournir de l'air froid dans l'au moins une chambre (2, 3) ; et
un évaporateur de fabrication de glace (110) disposé dans le corps principal de réfrigérateur (1) et relié au condenseur (20) pour congeler l'eau contenue dans le plateau de fabrication de glace (120),
**caractérisé en ce que** l'évaporateur de fabrication de glace (110) comprend en outre un boîtier (111) ayant une entrée et une sortie permettant d'introduire et d'évacuer un réfrigérant, et au moins une ou plusieurs partie(s) de coeur de glace (112) faisant chacune saillie à partir d'un côté du boîtier d'une certaine longueur et étant immergé dans l'eau du plateau de fabrication de glace (120), et **en ce que** le réfrigérateur comprend en outre :
un réservoir d'eau (310) configuré pour stocker l'eau devant être fournie dans le plateau de fabrication de glace (120) ou l'eau récupérée du plateau de fabrication de glace (120) ;
une conduite d'alimentation/drainage d'eau (320) reliée entre le réservoir d'eau (310) et le plateau de fabrication de glace (120) ; et
une pompe à eau (330) configurée de sorte à fournir ou à drainer en alternance l'eau, et disposée dans une partie de la conduite d'alimentation/drainage d'eau (320) et configurée pour pomper l'eau du réservoir d'eau (310) de sorte à fournir l'eau au plateau de fabrication de glace (120) par l'intermédiaire de la conduite d'alimentation/drainage d'eau (320) pour fabriquer de la glace au niveau de l'au moins une partie de coeur de glace (112) et pomper l'eau restant dans le plateau de fabrication de glace (120) de sorte à effectuer un drainage dans le réservoir d'eau (310) par l'intermédiaire de la conduite d'alimentation/drainage d'eau (320) avant que la glace fabriquée au niveau de l'au moins une partie de coeur de glace (112) ne soit séparée.

2. Réfrigérateur de la revendication 1, dans lequel l'évaporateur de refroidissement (30) est relié en parallèle à l'évaporateur de fabrication de glace (110).

3. Réfrigérateur de la revendication 1, dans lequel l'évaporateur de refroidissement (30) est relié en série à l'évaporateur de fabrication de glace (110).

4. Réfrigérateur de la revendication 2 ou 3, dans lequel l'évaporateur de refroidissement (30) est prévu en pluralité, et la pluralité d'évaporateurs de refroidissement (31, 32) sont reliés en parallèle les uns aux autres, et
dans lequel une pluralité de soupapes de détente (41, 42) sont disposées entre chacun des évaporateurs de refroidissement (31, 32) et le condenseur (20).

5. Réfrigérateur de la revendication 2 ou 3, dans lequel l'évaporateur de refroidissement (30) est prévu en pluralité, et la pluralité d'évaporateurs de refroidissement (31, 32) sont reliés en série les uns aux autres.

6. Réfrigérateur de la revendication 2, dans lequel une soupape (55, 56) pour limiter l'écoulement du réfrigérant est disposée entre le condenseur (20) et l'évaporateur de fabrication de glace (110) ou entre l'évaporateur de fabrication de glace et le compresseur (10) .

7. Réfrigérateur de la revendication 1, dans lequel l'évaporateur de refroidissement (30) est relié en série à l'évaporateur de fabrication de glace (110),
dans lequel l'évaporateur de refroidissement (30) est prévu en pluralité, et la pluralité d'évaporateurs de refroidissement (31, 32) sont reliés en parallèle les uns aux autres, et
dans lequel l'évaporateur de fabrication de glace (110) est relié en série à l'un de la pluralité d'évaporateurs de refroidissement (31, 32).

8. Réfrigérateur de la revendication 1, dans lequel l'évaporateur de refroidissement (30) et l'évaporateur de fabrication de glace (110) sont reliés à un condenseur (20) et
dans lequel le condenseur (20) auquel l'évaporateur de refroidissement (30) et l'évaporateur de fabrication de glace (110) sont reliés est relié à un compresseur (10).

9. Réfrigérateur de l'une quelconque des revendications 1 à 8, dans lequel une soupape de conversion de réfrigérant (51) est disposée sur un côté de refoulement du compresseur (10), et un tuyau de dérivation (62) pour guider un réfrigérant à haute température lors de la séparation de glace est relié entre la soupape de conversion de réfrigérant (51) et une entrée de l'évaporateur de fabrication de glace (110).

10. Réfrigérateur de la revendication 1, dans lequel le boîtier (111) se présente sous la forme d'un tuyau ayant une entrée et une sortie sur les deux côtés de celui-ci, et les parties de coeur de glace (112) sont formées individuellement le long de la direction longitudinale du boîtier (111) .

11. Réfrigérateur de la revendication 10, dans lequel les parties de coeur de glace (112) sont formées d'un seul tenant au niveau d'une surface latérale du boîtier (111), et dans lequel une plaque de guidage de réfrigérant (113) s'étend dans une direction longitudinale à l'intérieur de chaque partie de coeur de glace (112), pour diviser la partie de coeur de glace (112) dans une direction approximativement orthogonale à la direction d'écoulement d'un réfrigérant de sorte que les parties divisées de chaque partie de coeur de glace (112) communiquent les unes avec les autres au niveau de l'extrémité inférieure de celle-ci.

12. Réfrigérateur de la revendication 10, dans lequel la partie de coeur de glace (112) est fixée à une surface externe du boîtier (111), et
dans lequel la partie de coeur de glace (112) est configurée comme un caloduc ou une tige formée d'un matériau ayant une conductivité thermique élevée.

13. Réfrigérateur de l'une quelconque des revendications 1 à 12, dans lequel un récipient de stockage de glace (200) pour stocker la glace créée dans le plateau de fabrication de glace (120) est en outre prévu sur un côté du plateau de fabrication de glace (120), et un tuyau de drainage pour évacuer l'eau générée lorsque la glace est fondue est relié au récipient de stockage de glace (200), et
dans lequel le tuyau de drainage est relié au réservoir d'eau (310).

14. Réfrigérateur de l'une quelconque des revendications 1 à 13, comprenant en outre une unité d'entraînement de récipient (130) configurée de sorte qu'un moteur de séparation de glace pour faire tourner le plateau de fabrication de glace (120) afin de séparer la glace du récipient de fabrication de glace (120) permette au plateau de fabrication de glace (120) de tourner de manière bidirectionnelle, même pendant la fabrication de glace.
